# EUROPÄISCHE PATENTSCHRIFT

(11) **EP 1 474 595 B1**
(45) Veröffentlichungstag und Bekanntmachung des Hinweises auf die Patenterteilung: **14.03.2007**
(21) Anmeldenummer: 02782620.5
(22) Anmeldetag: 17.12.2002
(51) Int. Cl.: F02C 7/141, F02C 7/143, F02C 9/28, F02C 9/26, F02C 9/20

(54) **VERFAHREN ZUM BETRIEB EINER GASTURBOGRUPPE**
METHOD FOR OPERATING A GAS TURBINE GROUP
MODE DE FONCTIONNEMENT D'UN GROUPE A TURBINE A GAZ

(30) Priorität: 07.01.2002 CH 10200312; 19.02.2002 CH 284022002
(43) Veröffentlichungstag der Anmeldung: 10.11.2004
(73) Patentinhaber: Alstom Technology Ltd, 5400 Baden (CH)
(72) Erfinder: BRAUN, Jost, 79761 Waldshut-Tiengen (DE); HOFFMANN, Jürgen, CH-5417 Untersiggenthal (CH); MÖLLER, Uwe, CH-5116 Schinznach-Bad (CH)
(86) Internationale Anmeldenummer: PCT/CH2002/000709
(87) Internationale Veröffentlichungsnummer: WO 2003/058047

(56) Entgegenhaltungen:
- EP-A- 0 247 984
- EP-A- 0 781 909
- WO-A-00/08326
- CH-A- 210 657
- US-A- 3 867 811
- US-A- 5 553 448

## Beschreibung

### TECHNISCHES GEBIET

Die vorliegende Erfindung betrifft ein Verfahren zum Betrieb einer Gasturbogruppe gemäss dem Oberbegriff des Anspruchs 1.

### STAND DER TECHNIK

Die Deckung des Spitzenlastbedarfs und die schnelle Bereitstellung von Leistungsreserven ist in den liberalisierten Energiemärkten eine lukrative Einnahmequelle für die Kraftwerksbetreiber geworden. Zur Deckung von Spitzenlasten sind eine Reihe von Methoden zur Leistungssteigerung, wie Wasser- oder Dampfeinspritzung in der Brennkammer, Kühlung oder Zwischenkühlung der Eintrittsluft oder Wassereinspritzung in den Verdichter bekannt. Stand der Technik ist dabei eine einfache " Ein-/Aus-Funktion ", wobei bei allen bekannten Methoden typischerweise mit einer Erhöhung des Verschleisses von lebensdauerkritischen Teilen gerechnet wird.

So beschreibt z. B. die US 6, 012, 279 ein Verfahren zum Betrieb einer Gasturbogruppe, bei welchem entweder die Eintrittsluft in den Verdichter oder die teilkomprimierte Luft zwischen Verdichterstufen, oder auch an beiden Stellen gekühlt wird. Die Kühlung erfolgt dabei durch Einspritzung von Wasser und wird nicht geregelt. Die Einspritzung führt dazu, dass die Temperatur der weiter zu komprimierenden Luft reduziert wird, was zu einer Reduktion der Verdichterarbeit führt. Ausserdem führt die Wassereinspritzung zu einer Erhöhung des Gesamtmassenstromes. Beide Effekte führen zu einer Leistungserhöhung.

Die US 5, 463, 873 auf der anderen Seite beschreibt ein Verfahren zum Betrieb einer Gasturbogruppe, bei welchem die Luft vor Eintritt in den Verdichter mit Hilfe eines sogenannten "Fogging" gekühlt wird. Dabei wird die Einsaugluft vor dem Eintritt in die Gasturbine durch Verdunstung von Wasser, wobei eine Anfeuchtung nahe an die Sättigungsgrenze erreicht wird, abgekühlt. Es wird dabei die maximale Dampfsättigung der Eintrittsluft als Kontrollvariable zur Steuerung des "Fogging" verwendet. Ein ähnliches Verfahren beschreibt z. B. auch die US 6,250,064.

Weiterhin beschreibt die US 5, 622, 044 ein Verfahren zum Betrieb einer Gasturbine, bei welchem der Gasturbine ein Vorverdichter vorgeschaltet wird. Dieser Vorverdichter wird mit einem separaten Elektromotor angetrieben, und die Eintrittsluft des Vorverdichters wird dabei über einen Wasserspray gekühlt, ebenso fakultativ die aus dem Vorverdichter austretende vorkomprimierte Luft. Ziel ist es dabei, die Gasturbogruppe in Bezug auf die Leistung möglichst unabhängig von der Umgebungstemperatur betreiben zu können.

Als weitere Schrift in diesem Zusammenhang ist die US 6,216,433 zu erwähnen, welche eine Gasturbine beschreibt, bei welcher eine Leistungssteigerung durch die Einspritzung von Wassertröpfchen zwischen Ansaugschalldämpfer und Verdichtereintritt erfolgt, wobei die Tröpfchengröße im Bereich von 1 bis 50µm ist. Dabei wird so vorgegangen, dass zur Erhöhung der verfügbaren Leistung der Gasturbinenanlage um einen bestimmten Prozentsatz eine bestimmte einzuspitzende Menge von Wasser ausgerechnet wird. Diese Menge wird nun der Eintrittsluft zugeführt, indem ein Kontrollventil der Wasserzuführung entsprechend geöffnet wird. Während dieser Zeit wird die Zuführung von Brennstoff auf einem konstanten Wert gehalten. Erst anschließend wird die Zuführung von Brennstoff in die Brennkammer erhöht. Problematisch an dieser Fahrweise ist die Tatsache, dass die Einspritzung von Wasser vor dem Verdichter zu einer Änderung der Verbrennungstemperatur in der Brennkammer führt, und durch die in diesem Dokument beschriebene Fahrweise entsprechend Stabilitätsprobleme auftreten können. Zusammenfassend wird bei einer Fahrweise gemäss der US 6,216,433 die Einstellung der Wassereinspritzung in einer offenen Steuerkette betrieben. Insbesondere ist festzustellen, dass die Einstellung der Wassermenge respektive der Kühlungsleistung und die Einstellung der Brennstoffmenge sequentiell, zeitlich nacheinander, erfolgen. Weiterhin muss festgestellt werden, dass gemäss dem in der US 6,216,433 offenbarten Verfahren nicht sichergestellt werden kann, dass die Maschine tatsächlich auf nominaler Volllast und damit im Allgemeinen bei bestem Wirkungsgrad, läuft. Wenn die vorab berechnete Wassermenge beispielsweise zu gross bemessen ist, so wird die Gasturbine beim Erreichen der Sollleistung entweder unterhalb ihrer maximalen Feuerungstemperatur oder, sofern zutreffend, nicht mit voll geöffneter Vorleitreihe betrieben. Beides ist für den Wirkungsgrad der Gasturbine schädlich.

Siehe hierzu auch EP-A-0 781 909.

### DARSTELLUNG DER ERFINDUNG

Aufgabe der vorliegenden Erfindung ist es daher, ein Verfahren gemäss der Oberbegriff des unabhängigen Anspruchs anzugeben, mit dem die Nachteile des Standes der Technik vermieden werden. Insbesondere soll eine Leistungssteigerung durch Kühlung des Arbeitsmittels vor und/oder während der Verdichtung auf eine Weise realisiert werden, welche eine möglichst geringe Abweichung des Prozesses vom Auslegungspunkt mit sich bringt, und Transienten der Verbrennungsbedingungen möglichst zu vermeiden vermag. Das Verfahren ist insbesondere derart anzugeben, dass beim Betrieb einer Gasturbogruppe mit der Kühlung des Arbeitsmittel vor oder während der Verdichtung die Gasturbogruppe möglichst maximal gefeuert und gegebenenfalls mit einer voll geöffneten Vorleitreihe betrieben wird.

Diese Aufgabe wird durch die Gesamtheit der Merkmale des Hauptanspruches gelöst.

Der Kern der Erfindung liegt mit anderen Worten darin, eine geregelte Kühlung des angesaugten Arbeitsmittels und/oder teilkomprimierten Arbeitsmittels in Abhängigkeit der erwünschten Leistung einzusetzen, also die Nutzleistung der Gasturbogruppe als Führungsgrösse der zu implementierenden Regelung heranzuziehen. Dabei wird ein Regel-Betriebszustand beibehalten, bei welchem wenigstens ein Prozessparameter auf einen Sollwert geregelt wird, d.h. auf einem bestimmten Wert gehalten wird. Überraschenderweise ist dies einfach möglich und erlaubt eine einfache und unmittelbare Regelung der Anlage.

Ein besonderes Kennzeichen des erfindungsgemässen Verfahrens ist es, dass die Kühlungsleistung und die Brennstoffmenge an sich parallel geregelt werden, in dem Sinne, dass beide in Abhängigkeit voneinander abwechselnd verstellt werden.

Insbesondere wird gemäss der Erfindung also die Kühlung in einem geschlossenen Regelkreis mit einem Nutzleistungsparameter, beispielsweise der Wellenleistung der Gasturbogruppe oder auch der Generatorleistung einer einwelligen Kombianlage, wie sie aus dem Stand der Technik bekannt ist, als Führungsgrösse betrieben, wobei gleichzeitig ein weiterer massgeblicher Prozessparameter, beispielsweise die Turbineneintrittstemperatur durch eine Regelung der Brennstoffmenge und einer verstellbaren Vorleitreihe, in erster Linie konstantgehalten wird, worin sich die Erfindung durch die Steuerung der Kühlungsleistung im geschlossenen Regelkreis grundlegend beispielsweise von dem aus der US 6,216,433 bekannten Stand der Technik unterscheidet.

Der Vorteil dieser Regelung liegt u.a. im Folgenden begründet: Bis zu einer Nominal-Vollast wird eine Gasturbogruppe gemäss an sich bekannten Regelungskonzepten betrieben. Dies bedeutet, dass normalerweise zunächst die Leistung auf an sich bekannte Weise durch Variation der Heissgastemperatur am Turbineneintritt und des Arbeitsmittel-Massenstroms geregelt wird. Gemäss einem bevorzugten Betriebskonzept ist bei nominaler Volllast die Vorleitreihe voll geöffnet (die angesaugte Frischgasmenge ist dann maximal) und die Gasturbogruppe ist maximal gefeuert, dergestalt, dass die Heissgastemperatur einen oberen Grenzwert erreicht. Der Grenzwert wird dabei beispielsweise durch eine maximal zulässige Turbineneintrittstemperatur vorgegeben. Zur weiteren Leistungssteigerung wird nun ein Leistungsregler aktiviert, der abhängig von einer Regelabweichung der Nutzleistung die Kühlung des angesaugten und/oder teilkomprimierten Arbeitsmittels aktiviert. Es wird also vereinfacht ausgedrückt die Kühlung zugeschaltet und gleichzeitig auch über z.B. die vermehrte Zuführung von Brennstoff weiterhin wenigstens ein Prozessparameter wie z.B. die Turbineneintrittstemperatur, wenigstens näherungsweise konstant und gleichzeitig die Vorleitreihe im Wesentlichen offen gehalten. Der Vorgang hierbei ist eigentlich folgender: Im Betrieb auf Nominal-Vollast ohne Kühlung des angesaugten Arbeitsmittels ist ein Regler aktiv, welcher die konstantzuhaltende Prozessgrösse auf einem Sollwert hält, beispielsweise auf einen Maximalwert begrenzt. Dabei ist eine Regelabweichung der Nutzleistung nicht ausgeregelt, das heisst, die Sollleistung ist grösser als die Istleistung. Erst wenn dieser Regler alle Eingriffe vorgenommen hat, um die Leistung ohne Überschreitung des erwähnten Maximalwertes zu erhöhen, wird ein zweiter Regler aktiviert, welcher auf die Kühlleistung eingreift. Dabei wird diese entweder stetig oder in endlichen Schritten variiert. Die Kühlung des angesaugten Arbeitsmittels wirkt sich selbstverständlich auf den gesamten Arbeitsprozess der Gasturbogruppe aus; sie wirkt somit gleichermassen auch als Störgrösse für den Regelkreis des ersten Reglers. Der erste Regler fällt somit aus dem Begrenzer respektive registriert eine Abweichung des konstantzuhaltenden Prozessparameters vom Sollwert. Hiermit stehen auch dem ersten Regler Freiheitsgrade zur Verfügung, um die Leistung innerhalb seiner Regeldomäne zu erhöhen. In diesem Rahmen übemimmt sodann wieder der erste Regler die Führung, bis hier wieder ein Begrenzer erreicht wird, worauf der zweite Regler wiederum aktiviert wird und die Kühlungsleistung weiter erhöht. Bei entsprechender Abstimmung der Dynamik der Regelkreise wird die Kühlungsleistung annähernd stetig angepasst und der erste Regler hält die dort bestimmenden Prozessparameter in sehr engen Grenzen konstant, so lange, bis über das Zusammenspiel der Regler entweder die Leistung ausgeregelt ist, oder auch der zweite Regler eine Begrenzung, beispielsweise eine maximale Kühlleistung, erreicht hat. Im Weiteren könnten kumulativ, aber auch parallel zur Kühlung, andere an sich bekannte Massnahmen zur Leistungssteigerung, wie die Einbringung von Wasser oder Dampf in die Brennkammer oder Turbine oder in das Kühlluftsystem der Gasturbogruppe Verwendung finden. Es muss davon ausgegangen werden, dass, wenn die Kühlungsleistung in endlichen Schritten eingestellt wird, in einem Endzustand der erste Regler nicht ganz, wie gewünscht, in den Begrenzer läuft, oder den konstantzuhaltenden Prozessparameter nicht vollständig auszuregeln vermag. Für den Fachmann ist jedoch ohne weiteres erkennbar, dass auch dieser Fall ohne weiteres unter die in den Ansprüchen gekennzeichnete Erfindung subsummiert werden kann.

Im Gegensatz zu den aus dem Stand der Technik bekannten Verfahren werden insbesondere die Verbrennungsbedingungen keinen transienten Schwankungen oder gar Sprüngen unterworfen, was gerade bei der Verwendung von Vormischbrennertechnologie oder selbstzündenden Brennkammern wesentliche Vorteile hinsichtlich eines stabilen und sicheren Betriebes der Gasturbogruppe mit sich bringt. Weiterhin kann, auch ohne eine detaillierte thermodynamische Analyse, davon ausgegangen werden, dass ein Betrieb, bei dem zum Beispiel eine Vorleitreihe der Gasturbogruppe voll geöffnet ist und die Gasturbogruppe möglichst hoch gefeuert ist, jeweils in einer effizienten Energieumsetzung resultiert.

Im vorstehenden Absatz wird impliziert, dass es sich bei dem Bauteil zur Wärmezufuhr um eine Brennkammer handelt; es kann jedoch ohne weiteres, und insbesondere ohne vom Erfindungsgedanken abzuweichen, ein Katalysator oder ein Wärmetauscher verwendet werden.

Bei dem konstantzuhaltenden Prozessparameter handelt es sich insbesondere um eine Temperatur des Arbeitsmittels. Üblicherweise ist die kritische Grösse, d.h. der kritische Prozessparameter, auf dessen Konstanthaltung geregelt wird, durch die Temperatur des Arbeitsmittels beim Eintritt in eine Turbine gegeben. Diese Temperatur kann dabei bevorzugt als Mischtemperatur bestimmt werden. Dies ist so zu verstehen, dass eine direkte Messung der Turbineneintrittstemperatur aufgrund der hohen Gastemperaturen und der unmittelbaren Nachbarschaft gekühlter Wände nicht praktikabel ist. Daher wird eine Vergleichstemperatur beispielsweise aus der Temperatur nach der Turbine und dem Druckverhältnis über die Turbine berechnet. Diese Temperatur wird als Mischtemperatur bezeichnet, weil die zugehörige Messung den Kühlluftmassenstrom beinhaltet; die tatsächliche Gastemperatur am Turbineneintritt ist höher.

Es ist bekannt, zur Leistungssteigerung eine Einspritzung von beispielsweise Wasser und/oder Dampf und/oder eines anderen geeigneten Mediums, wie CO₂ oder ein anderes Gas, das evtl. bei chemischen Prozessen anfällt, zur Erhöhung des Massenstromes vor und/oder in und/oder unmittelbar hinter dem Bauteil zur Wärmezufuhr, im Allgemeinen also einer Brennkammer, in wenigstens einen Teil der komprimierten Ansaugluft respektive der heissen Verbrennungsluft vorzusehen. Die Einspritzung in die Brennkammer führt üblicherweise zu einer Erhöhung der Verdichterendtemperatur. Durch die zusätzliche Kühlung der Ansaugluft respektive die zusätzliche Zwischenkühlung wird die Verdichteraustrittstemperatur reduziert und damit der Betriebsbereich, in dem Dampfeinspritzung zur Leistungserhöhung eingesetzt werden kann, erweitert. Ohne diese Kombination mit der Kühlung des Arbeitsmittels vor und/oder während der Verdichtung sind Beschränkungen bei der Einspritzung in die oder nach der Brennkammer bei hohen Umgebungstemperaturen zu erwarten, wenn die Leistung des Gasturbinenkraftwerkes ohnehin kleiner wird und der Bedarf für Leistung für die meisten Anwendungen am höchsten ist. Daher kann besonders vorteilhaft die Kühlung des Arbeitsmittels vor und/oder während der Verdichtung mit der beschriebenen Einbringung eines Zusatzmediums kombiniert werden. Die Einbringung des Zusatzmediums, welches im Allgemeinen ein inertes Medium ist, erfolgt beispielsweise über die Kühlluftversorgung für die erste Leitschaufelreihe in den Heissgaspfad, wobei das Medium beispielsweise über eine mit einem Stellorgan versehene, in einen Ringraum für Kühlluft mündende Leitung zugeführt wird, und wobei das Zusatzmedium anschliessend über eine Kühlluftöffnung durch den Hitzeschild auf die Leitschaufeln der erste Turbinen-Leitreihe geleitet wird. Alternativ oder gleichzeitig ist es möglich, die Einspritzung so zu gestalten, dass sie Zusatzmedium über die Kühlluftversorgung für die Schaufeln der ersten Turbinen-Laufreihe in den Verbrennungsluftpfad eindüst. Grundsätzlich ergibt bei einer Eindüsung stromab der Brennkammer der Vorteil, dass durch die Eindüsung nicht nur der Massenstrom beim Turbineneintritt erhöht wird, sondern auch zusätzlich eine vorteilhafte Kühlwirkung auftritt. Grössere Mengen von inertem Medium sind weiterhin nicht immer unproblematisch in die Brennkammer einzudüsen. Wird nämlich ein inertes Medium direkt in die Brennkammer eingedüst, so vermag dies die Verbrennung zu stören, was in erhöhten Emissionen oder instabiler Verbrennung resultiert. Die Zuleitung speziell von Dampf zur ersten Leitschaufelreihe respektive zur ersten Turbinen-Laufschaufelreihe weist weiterhin den Vorteil auf, dass durch die zusätzliche Verwendung von Dampf im normalen Kühlluftpfad diese Schaufeln, die eigentlich auf eine Kühlung durch Luft ausgelegt sind, infolge der höheren Wärmekapazität und des guten Wärmeübergangs an Wasserdampf stärker als notwendig gekühlt sind. Infolgedessen wird es möglich, die Feuerungstemperatur potenziell weiter zu erhöhen, wodurch die über die eigentliche Nominalleistung der Gasturbogruppe hinaus erschliessbaren Leistungspotenziale zusätzlich vergrössert werden.

Durch die erfindungsgemässe Regelung wird die Gasturbogruppe jederzeit bestmöglich betrieben, d. h. der Einsatz von leistungssteigernden Massnahmen wird auf den gesamten Prozess optimiert und damit der Verschleiss minimal gehalten, und der Verbrauch an Brennstoff, die Kühlleistung und gegebenenfalls ein Kühlmittelverbrauch, sowie der Verbrauch von gegebenenfalls eingespritztem Dampf und /oder Wasser wird ebenfalls auf das gerade notwendige Minimum reduziert.

Zusammenfassend kann der Kern des erfindungsgemässen Verfahrens also dadurch beschrieben werden, dass der eigentliche Gasturbinenprozess unter Vollastbedingungen betrieben wird, oder, wenn die Kühlungsleistung nur in diskreten Schritten einstellbar ist, zumindest in der Nähe der Vollastbedingungen, und die Leistungsregelung an sich durch ein Vertrimmen des Vollastpunktes mittels der variablen Kühlung des Arbeitsmittels vor und/oder während der Verdichtung realisiert wird.

Gemäss einer bevorzugten Ausführungsform der Erfindung wird eine Gasturbogruppe mit sequentieller Verbrennung, wie sie beispielsweise aus der EP 620 362 bekannt ist, bei welcher dem teilentspannten Arbeitsmittel wenigstens einmal zwischen zwei Turbinen oder Turbinenstufen zusätzlich Wärme zugeführt wird, gemäss dem erfindungsgemässen Verfahren betrieben. Die oben diskutierte fakultative Einbringung von Zusatzmedium erfolgt dort bevorzugt auf möglichst hohem Druckniveau, insbesondere also im Bereich der ersten Brennkammer.

Die Kühlung des Arbeitsmittels vor und/oder während der Verdichtung erfolgt beispielsweise durch eine Kühlungsvorrichtung, welche vor dem Verdichter oder auch zwischen einem Nieder- und einem Hochdruckverdichter angeordnet ist. Dabei kann es sich um einen Wärmetauscher handeln, der primärseitig von Arbeitsmittel um- oder durchströmt wird, und der sekundärseitig von einem Kühlmedium um- oder durchströmt wird, und wobei in Abhängigkeit von der Regelabweichung der Nutzleistung zur Steuerung der Kühlungsleistung die Vorlauftemperatur und/oder der Massenstrom des Kühlmediums variiert wird. Alternativ oder zusätzlich können auch Wärmetauscherflächen zu- oder abgeschaltet werden. Identische Steuerungsmechanismen für die Kühlleistung greifen bei Verwendung eines an einer überströmten Oberfläche benetzten Verdunstungskühlers. Weiterhin kann auch ein Einspritzkühler Verwendung finden, dessen eingespritzter Flüssigkeitsmassenstrom variiert wird. Dabei ist es durchaus möglich, die eingespritzte Wassermenge so zu bemessen, dass eine eigentliche Übersättigung des Arbeitsmittels erreicht wird, so, dass Flüssigkeit in stromab gelegene Verdichterstufen eintritt, und dort durch Wärmeaufnahme und Verdunstung für eine Innenkühlung des Verdichters sorgt.

Die Ist-Leistung wird, sofern dies zugänglich ist, auf an sich bekannte Weise als Klemmenleistung eines als Leistungsverbraucher angetriebenen Generators bestimmt. Eine vom Fachmann routinemässig anzuwendende Massnahme ist auch, diese mittels auf der Abtriebswelle der Gasturbogruppe angeordneten Dehnmessstreifen zu bestimmen. Gemäss einer Ausführungsform der Erfindung wird zur Bestimmung der Ist-Leistung eine andere geeignete Prozessgrösse oder eine geeignete Kombination von Prozessgrössen herangezogen, welche ein Mass für die Leistung der Gasturbogruppe darstellen. Die als Mass für die Leistung als Regelgrösse geeignet heranzuziehenden Prozessgrössen sind insbesondere die Abgastemperatur, die Heissgastemperatur, die ambiente Temperatur, der Verdichterendruck, ein Verdichterzwischendruck, die Temperatur spezifischer Bauteile, die Abgaswärmeleistung, und/oder die Einstellung der Verdichtervorleitreihen respektive eine geeignete eine Kombination der genannten Parameter. Gemäss einer weiteren Ausführungsform der Erfindung ist Gasturbogruppe in eine Cogeneration-Anlage mit Prozessdampfauskopplung integriert, wobei in diesem Fall als geeignete Prozessgrösse insbesondere die Abgaswärmeleistung, entweder allein oder in Kombination mit einer anderen geeigneten Prozessgrösse zur Steuerung der Kühlungsleitung und/oder der Einspritzung des Zusatzmediums verwendet wird.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung einer Gasturbogruppe mit einem Zwischenkühler im Verdichter, wobei der Zwischenkühler erfindungsgemäss geregelt wird;
- Fig. 2: eine Gasturbogruppe, bei welcher ein Einspritzkühler zur Ansaugluftkühlung gemäss der Erfindung geregelt wird;
- Fig. 3: eine Gasturbogruppe mit sequentieller Verbrennung und einem Ansaugluft- sowie einem Zwischenkühler, sowie einer Einbringung von Zusatzmedium stromauf der Hochdruckturbine, wobei die Kühler und die Einbringung von Zusatzmedium erfindungsgemäss geregelt werden.
Die Ausführungsbeispiele sind rein instruktiv für die in den Ansprüchen gekennzeichnete Erfindung zu verstehen. Insbesondere sind die Regelabläufe sehr stark vereinfacht dargestellt.

### WEGE ZUR AUSFÜHRUNG DER ERFINDUNG

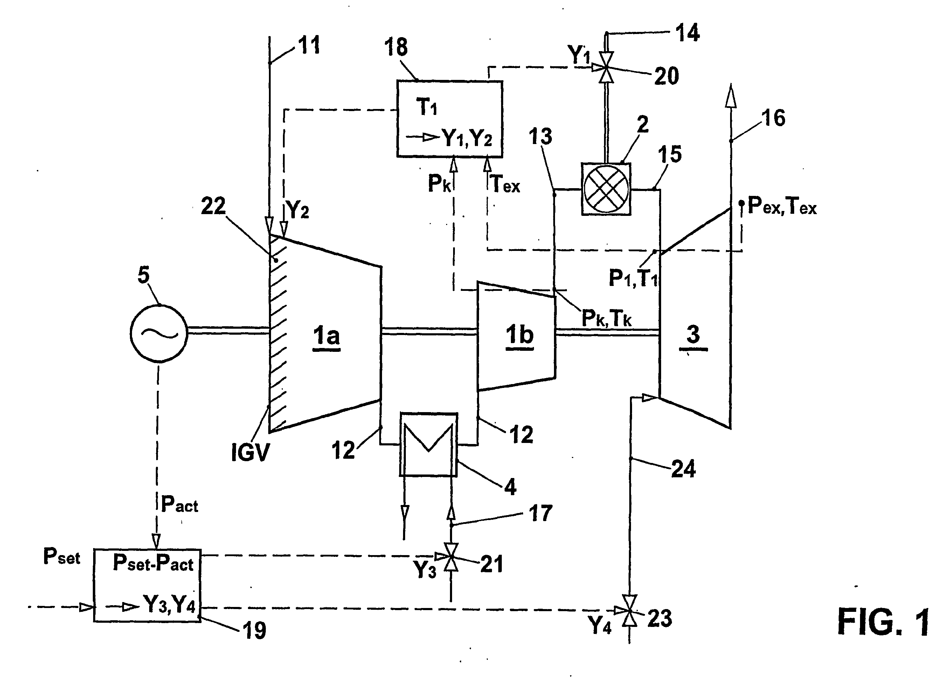

Fig 1 zeigt eine Gasturbinenanlage zur Ausführung eines erfindungsgemässen Verfahrens. Ein Verdichter 1, bestehend aus einem ersten Teilverdichter 1a und einem zweiten Teilverdichter 1b, saugt eine Luftmenge 11 als Arbeitsmittel der Gasturbogruppe an. Diese Luftmenge wird im ersten Teilverdichter 1a auf einen ersten Druck verdichtet, die teilverdichtete Luft 12 durchströmt eine als Wärmetauscher ausgeführte Kühlvorrichtung 4, und strömt in den zweiten Teilverdichter 1b ein. Dort wird die Luft weiter verdichtet. Verdichtetes Arbeitsmittel 13 strömt bei einem Druck pₖ und einer Temperatur Tₖ in eine Brennkammer 2 ein. Dort wird eine Brennstoffmenge 14 zugeführt und verbrannt. Heissgas 15 strömt mit einer Temperatur T₁ und einem Druck p₁ in die Turbine 3 ein, und wird dort unter Abgabe einer Nutzleistung entspannt, bevor es als entspanntes Abgas 16 auf einer Temperatur Tₑₓ und einem Druck pₑₓ, welcher im wesentlichen dem Atmosphärendruck entspricht, abströmt. Die hohe Abwärme dieses Gases kann auf an sich bekannte und nicht erfindungswesentliche Weise beispielsweise in einem Abhitzedampferzeuger genutzt werden. Die Turbine treibt den Verdichter und einen Generator 5 an. Der erste Teilverdichter 1a ist mit einer verstellbaren Vorleitreihe 22 versehen, deren Stellung IGV ganz wesentlich die angesaugte Luftmenge bestimmt. Die folgende Darstellung der Regelungsabläufe ist im Sinne der Übersichtlichkeit und der leichteren Verständlichkeit stark vereinfacht und auf die erfindungsrelevanten Aspekte fokussiert. In der Nähe der nominalen Gasturbinen-Volllast wird die Steuerung im wesentlichen vom Regler 18 übernommen, der bei Volllast in einer Begrenzung für die Turbineneintrittstemperatur T₁ arbeitet. Diese Temperatur kann im allgemeinen nicht durch eine direkte Messung bestimmt werden, sondern wird aus dem Verdichter-Enddruck pₖ und der Turbinen-Austrittstemperatur Tₑₓ berechnet. Der Regler greift einerseits über die Steuergrösse Y₁ auf das Brennstoffmengen-Stellorgan 20 und andererseits über die Steuergrösse Y₃ auf die Stellung IGV der Vorleitreihe 22 ein. Bei Vollast ist die Vorleitreihe voll geöffnet, der Eintrittsvolumenstrom in den ersten Teilverdichter 1a also maximal, und die Turbineneintrittstemperatur ist auf einen Maximalwert geregelt. An dieser Stelle greift nunmehr das erfindungsgemässe Regelungsverfahren zur weiteren Leistungssteigerung ein. Ein zweiter Regler 19 registriert eine Abweichung der Ist-Leistung P_{act} von der angeforderten Soll-Leistung Pₛₑₜ. Entsprechend wird über eine Steuergrösse Y₃ auf ein Stellorgan 21 für den Massenstrom eines zum Wärmetauscher 4 strömenden Kühlmediums 17 eingegriffen, und dieser erhöht. Damit sinkt die Temperatur des teilverdichteten Arbeitsmittels 12 beim Eintritt in den zweiten Teilverdichter 1b, und damit auch die Verdichterendtemperatur Tₖ. Damit sinkt einerseits die Leistungsaufnahme des Teilverdichters 1b, was auf der einen Seite die Leistung erhöht. Andererseits fällt bei gleichbleibender Brennstoffmenge dei Turbineneintrittstemperatur; der Regler 18 läuft damit aus dem Begrenzer und hat wiederum Freiheitsgrade, die Leistung zu erhöhen; Regler 19 wird dann beispielsweise passiv, bis Regler 18 wieder im Begrenzer läuft, und erhöht erst dann die Kühlungsleistung der Kühlvorrichtung durch Öffnen des Stellorgans 21 weiter. Dieser Vorgang wiederholt sich, bis die Leistung entweder ausgeregelt ist, oder das Stellorgan 21 maximal geöffnet, die Kühlungsleistung der Kühlungsvorrichtung 4 also maximal, ist. Die dargestellte Gasturbogruppe weist in diesem Falle noch die fakultative Möglichkeit auf, dass der Regler 19 über eine Steuergrösse Y₄ auf eine Stellorgan 23 eingreift, und eine Menge eines Zusatzmediums 24, beispielsweise Dampf, zur weiteren Leistungssteigerung der Gasturbogruppe der Turbine 3 zuleitet.

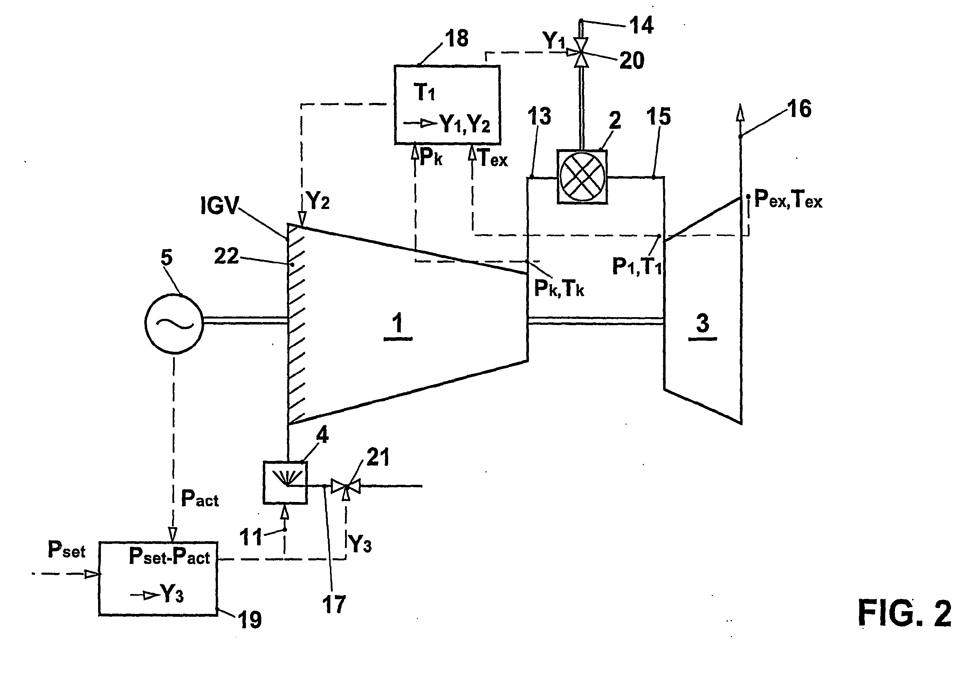

Figur 2 zeigt eine weitere Ausführungsform einer Gasturbogruppe zur Durchführung des erfindungsgemässen Verfahrens. Im Wesentlichen entspricht diese der in Figur 1 dargestellten Ausführungsform. Die Mittel 4, welche die Kühlung des Arbeitsmittels bewerkstelligen, sind bei dieser Ausführungsform stromauf des Verdichters 1 angeordnet, und sind als Einspritzkühler ausgeführt. Die Anwendung eines Wärmetauschers stromauf des Verdichters ist prinzipiell möglich, unterliegt aber Grenzen durch das erforderliche treibende Temperaturgefälle. Die Anordnung einer Kältemaschine an dieser Stelle ist im Stand der Technik durchaus offenbart. Der dargestellte Einspritzkühler hat hierbei den Vorteil, die Ansaugluft 11 zunächst bis zur Kühlgrenztemperatur abkühlen zu können. Wenn die Kühlleistung weiter gesteigert werden soll, tritt flüssiges Medium in den Verdichter ein. Bei der Temperaturerhöhung des Arbeitsmittels im Verdichter 1 verdampft die Flüssigkeit sukzessive, und bewerkstelligt auf diese Weise eine Innenkühlung des Verdichters; dabei resultiert einerseits die Erhöhung des Massenstroms und andererseits die Verminderung der Leistungsaufnahme des Verdichters 1 durch die Kühlung in einer Erhöhung der Leistungspotenziale. Vollkommen analog zum oben in Zusammenhang mit Figur 1 beschriebenen Regelungsvorgang wird die Gasturbogruppe erfindungsgemäss durch den Regler 18 durch das Zusammenspiel der Stellung IGV der Vorleitreihe und die Brennstoffmengensteuerung im Begrenzer für die Turbineneintrittstemperatur T₁ gehalten; der Regler 18 wird also als Temperaturregler betrieben. Der Regler 19 hingegen wirkt als Leistungsregler auf die Menge der in den Kühler 4 eingebrachten Flüssigkeitsmenge durch Eingriff auf des Stellorgan 21 mittels der abhängig von der Regelabweichung Pₛₑₜ - P_{act} gebildeten Steuergrösse Y₃ ein; durch Erhöhung der eingebrachten Flüssigkeitsmenge, im allgemeinen Wasser - wird die Kühlungsleistung gesteigert, wenn mehr Leistung angefordert ist. Selbstverständlich kann ein Einspritzkühler auch als Zwischenkühler verwendet werden.

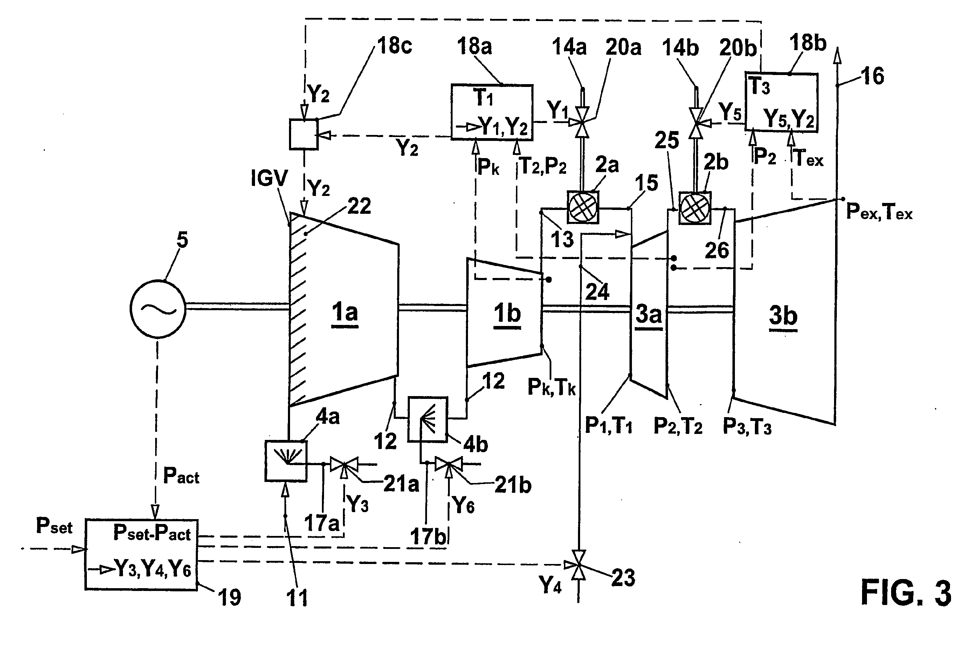

In Figur 3 ist eine Gasturbogruppe mit sogenannter sequentieller Verbrennung dargestellt, wie sie an sich aus der EP 620 362 bekannt ist. Der Arbeitsprozess der dargestellten Gasturbogruppe kann in groben Zügen so beschrieben werden, dass ein Arbeitsmittelmassenstrom 11 eine erste Kühlvorrichtung 4a durchströmt, und in zwei Teilverdichtern 1a und 1b verdichtet wird, wobei das teilverdichtete Arbeitsmittel 12 zwischen den Teilverdichtern eine zweite Kühlvorrichtung durchströmt. Dem verdichteten Arbeitsmittel 13, wird in einer ersten Brennkammer 2a eine Brennstoffmenge 14a zugefügt und diese verbrannt. Das gespannte heisse Rauchgas 15 mit einer Temperatur T₁ und einem Druck p₁ wird in einer ersten Turbine 3a auf den Druck p₂ teilentspannt; das Druckverhältnis dieser Teilentspannung liegt typischerweise im Bereich von 1,5 bis 2. Das teilentspannte Rauchgas 25, mit der Temperatur T₂ hat selbst unter Vollastbedingungen noch einen Sauerstoffgehalt von 15 Vol-% und darüber. Daher kann diesem ohne weiteres in einer zweiten Brennkammer 2b weiterer Brennstoff 14b zugeführt und verbrannt werden. Rauchgas 26 strömt mit der Temperatur T₃ in die zweite Turbine 3b ein. In der zweiten Turbine 3b wird das Heissgas auf den Druck pₑₓ entspannt, der üblicherweise ungefähr dem Umgebungsdruck entspricht. Die Restwärme der Abgase 16, welche die Temperatur Tₑₓ aufweisen, wird bevorzugt auf an sich bekannte Weise genutzt. Die Turbinen treiben den Kompressor 1a, 1b und einen Generator 5 an. Bei dem Betriebszustand bei welchem die Erfindung greift, bei Leistungsanforderungen oberhalb der eigentlichen Nominal-Vollast der Gasturbogruppe, ist die Vorleitreihe 22 voll geöffnet, das heisst, der Ansaug-Volumenstrom ist maximal, und die Regler 18a und 18b regeln die Turbineneintrittstemperaturen T₁ und T₃ auf zulässige Maximalwerte. Dabei werden diese Temperaturen aus den bereits erörterten Gründen nicht unmittelbar gemessen, sondern beispielsweise aus den jeweiligen Turbinenaustrittstemperaturen T₂ und Tₑₓ und Druckverhältnissen über die Turbinen 3a und 3b berechnet. Erfindungsgemäss wird in diesem Betriebszustand der Regler 19 aktiviert. Wenn dieser eine Regelabweichung Pₛₑₜ - P_{act} registriert, greift er erfindungsgemäss über die Steuergrössen Y₃ und Y₆ auf die Mittel 21a, 21b zur Steuerung der Kühlungsleistung ein. Im beispielhaft dargestellten Falle handelt es sich um Stellorgane, welche die Zufuhr von Flüssigkeit zu den Einspritzkühlern 4a und 4b steuern. Die Vorteile, welche ein Einspritzkühler als Ansaugluftkühler 4a gegenüber einem Wärmetauscher prinzipiell mit sich bringt, wurden in Verbindung mit Figur 2 dargelegt, wenngleich an dieser Stelle auch eine andere Kühlerbauart Verwendung finden könnte, ohne das Wesen der Erfindung zu berühren. Auch für den Zwischenkühler 4b kann im Rahmen der Erfindung eine beliebige andere Kühlerbauart eingesetzt werden, was im Zusammenhang mit Figur 1 dargestellt wurde. Im dargestellten Fall muss aber beispielsweise bei Verwendung eines Wärmetauschers als Zwischenkühler 4b darauf geachtet werden, den Taupunkt des vom Ansaugluftkühler 4a befeuchteten oder überfeuchteten Arbeitsmittels nicht zu unterschreiten. Die Verwendung von Einspritzkühlern hat weiterhin den Vorteil, das Arbeitsmittel fakultativ zu überfeuchten, dergestalt, dass Flüssigkeitstropfen in stromab gelegene Verdichterstufen eindringen und dort während des Verdichtungsvorganges für eine Innenkühlung des Verdichters sorgen. Selbstverständlich wäre es in diesem Rahmen auch möglich, die Gasturbogruppe mit mehr als zwei Kühlem auszuführen. Die Aufteilung einer angeforderten Kühlungsleistung auf die einzelnen Kühler ist eine Frage der thermodynamischen Feinauslegung, und im Rahmen der Erfindung nicht wesentlich. Wie schon oben dargelegt, laufen bei Aktivierung der Kühlungsvorrichtungen die Regler 18a, 18b aus der Temperaturbegrenzung. Der Regler 19 wird vorderhand wieder deaktiviert, und die Regler 18a und 18b arbeiten wieder als Last- und Temperaturregler, wobei das detaillierte Zusammenspiel dieser Regler darzustellen den Rahmen dieser Beschreibung sprengen würde. In einer Ausführungsform greifen die Regler 18a und 18b im Bestreben, die Turbineneintrittstemperaturen im Begrenzer zu halten, über Steuergrössen Y₂ auf die Stellung IGV der verstellbaren Vorleitreihe 22 ein; dabei werden die Steuersignale von den beiden Reglern 18a und 18b im Vorleitreihenregler 18c verarbeitet und erst dann an die Vorleitreihe weitergeleitet. Die Regler 18a und 18b haben nunmehr einen Freiheitsgrad, mit dem sie auf die nicht ausgeregelte Leistung reagieren können. Durch Eingriffe auf die Brennstoff-Stellorgane 20a und 20b wird die den Brennkammern zugeleitete Brennstoffmenge erhöht, und, um die Turbineneintrittstemperaturen konstant zu halten, wird die Vorleitreihe -wieder geöffnet. Wenn nunmehr die Vorleitreihe wieder voll geöffnet ist, wird der Regler 19 wieder aktiviert, und erhöht gegebenenfalls wieder die Kühlungsleistung. Bei einer entsprechenden Anpassung der Reglerdynamik läuft dieser Prozess kontinuierlich ab. In einer Ausführungsform kann die Kühlungsleistung nur in Stufen eingestellt werden; die Gasturbogruppe läuft dann bei einer ausgeregelten Leistung möglicherweise nicht im Begrenzer der Regler 18a und 18b, also sozusagen nicht in Ihrem Vollastzustand, und insbesondere wäre die Vorleitreihe nicht vollständig geöffnet, wobei dieser Betriebszustand, mit einer geringen Abweichung vom Vollastzustand der Regler 18 aber gleichwohl unter die Erfindungsidee zu subsummieren ist. Wenn die Kühlungsleistung einen maximalen Wert erreicht hat und die Leistung noch nicht ausgeregelt ist, wird bei der dargestellten Maschine eine Einspritzung von beispielsweise Dampf oder einem anderen Zusatzmedium 24 in Betrieb genommen, welche ebenfalls vom Regler 19 durch einen Eingriff auf das Stellorgan 23 gesteuert wird. Die Einbringung von Zusatzmedium ist stromauf der ersten Turbine 3a dargestellt, was zu einer besten Ausnutzung des Arbeitsvermögens des Zusatzmediums führt; es kann selbstverständlich das Zusatzmedium ganz oder teilweise stromab der zweiten Brennkammer 2b eingebracht werden, wenn eine Beeinträchtigung der Verbrennung in der zweiten Brennkammer 2b durch das Zusatzmedium befürchtet wird, oder wenn das Schluckvermögen der Hochdruckturbine 3a erschöpft ist. Ebenso könnte dieses Zusatzmedium durch das Kühlsystem der Gasturbogruppe eingebracht werden; das erfindungsgemässe Betriebsverfahren wäre dann auf geeignete Weise - kaskadierend oder parallel - mit einem aus der EP 995 891 bekannten Verfahren zur Leistungssteigerung einer Gasturbogruppe verknüpft. Auf diese Weise erschliessen sich dem Fachmann ohne Weiteres weitere Möglichkeiten, die Erfindung zu realisieren, ohne dabei den in den Ansprüchen gekennzeichneten Rahmen zu verlassen.

### BEZUGSZEICHENLISTE

- 1: Verdichter
- 1a: Teilverdichter, Niederdruckverdichter
- 1b: Teilverdichter, Hochdruckverdichter
- 2: Bauteil zur Wärmezufuhr, Brennkammer
- 2a: erste Brennkammer, Hochdruckbrennkammer
- 2b: zweite Brennkammer, Niederdruckbrennkammer
- 3: Turbine
- 3a: erste Turbine, Hochdruckturbine
- 3b: zweite Turbine, Niederdruckturbine
- 4: Kühlungsvorrichtung
- 4a: Kühlungsvorrichtung, Ansaugluftkühler
- 4b: Kühlungsvorrichtung, Zwischenkühler
- 5: Generator
- 11: Arbeitsmittel
- 12: teilverdichtetes Arbeitsmittel
- 13: verdichtetes Arbeitsmittel
- 14, 14a, 14b: Brennstoffmenge
- 15: gespanntes erhitztes Arbeitsmittel, Heissgas, Rauchgas
- 16: entspanntes Arbeitsmittel, entspanntes Rauchgas
- 17, 17a, 17b: Kühlmedium
- 18, 18a, 18b: Regler
- 18c: Vorleitreihenregler
- 19: Regler
- 20, 20a, 20b: Brennstoffmengen-Stellorgan
- 21, 21a, 21b: Stellorgan für Kühlmedium, Stellorgan für die Kühlungsleistung
- 22: Vorleitreihe
- 23: Stellorgan für Zusatzmedium
- 24: Zusatzmedium
- 25: teilentspanntes Arbeitsmittel, teilentspanntes Rauchgas
- 26: nacherhitztes Arbeitsmittel, nacherhitztes Rauchgas
- IGV: Vorleitreihenstellung
- P_{act}: Leistungs-Istwert
- Pₛₑₜ: Leistungs-Sollwert
- p₁,...,p₃, pₖ, pₑₓ: Prozessdrücke
- T₁,...,T₃, Tₖ, Tₑₓ: Prozesstemperaturen
- Y₁,...,Y₆: Steuergrössen

## Patentansprüche

1. Verfahren zum Betrieb einer Gasturbogruppe , wobei
ein Arbeitsmittel (11, 12) in wenigstens einem Verdichter (1, 1a, 1b) komprimiert wird,
das komprimierte Arbeitsmittel (13) in einem Bauteil zur Wärmezufuhr (2, 2a, 2b) durch Zuführung einer Wärmemenge erhitzt wird,
das erhitzte Arbeitsmittel (15, 26) aus dem Bauteil zu Wärmezufuhr in wenigstens eine Turbine (3, 3a, 3b) geleitet und entspannt wird,
bei der Entspannung des Arbeitsmittels in der Turbine eine Wellenleistung erzeugt wird, wenigstens ein erster Teil der Wellenleistung zum Antrieb des Verdichters verwendet wird,
ein den ersten Teil überschreitender Teil der Wellenleistung als Nutzleistung (P_{act}) zum Antrieb eines Leistungsverbrauchers (5) verwendet wird, und
das Arbeitsmittel vor und/oder während der Verdichtung zur Ausregelung einer Regelabweichung (Pₛₑₜ - P_{act}) der Nutzleistung (P_{act}) mit einer Kühlungsleistung gekühlt wird,
**dadurch gekennzeichnet, dass** parallel zu einer Verstellung der Kühlungsleistung die zugeführte Wärmemenge derart eingestellt wird, dass wenigstens eine Turbineneintrittstemperatur (T₁, T₃) des Arbeitsmittels fortwährend im Wesentlichen konstantgehalten wird.

2. Verfahren nach Anspruch 1, **dadurch gekennzeichnet**, **dadurch gekennzeichnet, dass** die Stellung einer verstellbaren Vorleitreihe (22) konstantgehalten wird.

3. Verfahren nach Anspruch 2, **dadurch gekennzeichnet, dass** die Vorleitreihe maximal offengehalten wird.

4. Verfahren nach einem der vorhergehenden Ansprüche, **dadurch gekennzeichnet, dass** einem in wenigstens einer Turbine (3a) teilentspannten Arbeitsmittel (25) wenigstens einmal zwischen zwei Turbinen (3a, 3b) oder Turbinenstufen zusätzlich Wärme zugeführt wird.

5. Verfahren nach einem der vorstehenden Ansprüche, **dadurch gekennzeichnet, dass** die Nutzleistung der Gasturbogruppe indirekt anhand einer geeignete Prozessgrösse oder eine Kombination geeigneter Prozessgrössen bestimmt wird.

6. Verfahren nach Anspruch 5, **dadurch gekennzeichnet, dass** es sich bei der geeigneten Prozessgrösse um die Abgastemperatur, die Heissgastemperatur, die Umgebungsbedingungen, den Verdichterendruck, einen Verdichterzwischendruck, die Einstellung variabler Verdichterleitreihen oder um eine Kombination von wenigstens zwei der vorstehend genannten Grössen handelt.

7. Verfahren nach einem der vorstehenden Ansprüche, wobei unverdichtetes Arbeitsmittel (11) oder teilverdichtetes Arbeitsmittel (12) durch und/oder um die Primärseite eines Wärmetauschers (4) geleitet wird, dessen Sekundärseite mit einem Kühlmittel beaufschlagt wird, **dadurch gekennzeichnet, dass** die Kühlungsleistung durch die Einstellung der Vorlauftemperatur und/oder des Massenstroms des Kühlmittels eingestellt wird.

8. Verfahren nach einem der vorstehenden Ansprüche, wobei das unverdichtete und/oder teilverdichtete Arbeitsmittel über die benetzte Oberfläche eines Verdunstungskühlers geleitet wird, **dadurch gekennzeichnet, dass** die Kühlungsleistung durch die Einstellung der über die benetzte Oberfläche des Kühlers geleiteten Flüssigkeitsmenge eingestellt wird.

9. Verfahren nach einem der vorstehenden Ansprüche, **dadurch gekennzeichnet, dass** die Kühlungsleistung durch die Einstellung einer in das Arbeitsmittel eingespritzten Flüssigkeitsmenge eingestellt wird.

10. Verfahren nach einem der vorhergehenden Ansprüche, **dadurch gekennzeichnet, dass** weiterhin zur Leistungssteigerung der Gasturbogruppe ein Zusatzmedium (24), insbesondere Dampf oder Wasser, vor und/oder in und/oder unmittelbar hinter dem Bauteil zur Wärmezufuhr (2, 2a, 2b) in wenigstens einen Teil des komprimierten Arbeitsmittels eingebracht wird.

## Claims

1. Method for operating a gas turbine group, in which:
a working medium (11, 12) is compressed in at least one compressor (1, 1a, 1b),
the compressed working medium (13) is heated in a heat supply component (2, 2a, 2b) by a heat quantity being supplied,
the heated working medium (15, 26) is passed from the heat supply component into at least one turbine (3, 3a, 3b) and expanded,
the expansion of the working medium in the turbine generates a shaft power,
at least a first part of the shaft power is used to drive the compressor,
a further part of the shaft power, which is greater than the first part, is used as useful power (P_{act}) for driving a power consumer (5), and
the working medium, before and/or during the compression, is cooled with a cooling power in order to stabilize a control deviation (Pₛₑₜ - P_{act}) in the useful power (P_{act}),
**characterized in that**, in parallel with an adjustment of the cooling power, the heat quantity supplied is set in such a manner that at least a turbine inlet temperature (T₁, T₃) of the working medium is constantly kept substantially constant.

2. The method as claimed in claim 1, **characterized in that** the position of an adjustable inlet guide vane row (22) is kept constant.

3. The method as claimed in claim 2, **characterized in that** the inlet guide vane row is kept in its maximum open position.

4. The method as claimed in one of the preceding claims, **characterized in that** heat is additionally supplied at least once, between two turbines (3a, 3b) or turbine stages, to a working medium (25) which has been partially expanded in at least one turbine (3a).

5. The method as claimed in one of the preceding claims, **characterized in that** the useful power of the gas turbine group is determined indirectly on the basis of a suitable process variable or a combination of suitable process variables.

6. The method as claimed in claim 5, **characterized in that** the suitable process variable is the exhaust-gas temperature, the hot-gas temperature, the ambient conditions, the compressor pressure, a compressor intermediate pressure, the setting of variable compressor guide vane rows or a combination of at least two of the variables listed above.

7. The method as claimed in one of the preceding claims, in which uncompressed working medium (11) or partially compressed working medium (12) is passed through and/or around the primary side of a heat exchanger (4), the secondary side of which is acted on by a coolant, **characterized in that** the cooling power is set by the setting of the feed temperature and/or the mass flow of the coolant.

8. The method as claimed in one of the preceding claims, in which the uncompressed and/or partially compressed working medium is passed over the wetted surface of an evaporative cooler, **characterized in that** the cooling power is set by the setting of the quantity of liquid passed over the wetted surface of the cooler.

9. The method as claimed in one of the preceding claims, **characterized in that** the cooling power is set by the setting of a quantity of liquid injected into the working medium.

10. The method as claimed in one of the preceding claims, **characterized in that** furthermore an additional medium (24), in particular steam or water, is introduced into at least part of the compressed working medium, upstream of and/or in and/or immediately downstream of the heat supply component (2, 2a, 2b) in order to increase the power of the gas turbine group.

## Revendications

1. Procédé pour faire fonctionner un groupe à turbine à gaz, dans lequel :
un fluide de travail (11, 12) est comprimé dans au moins un compresseur (1, 1a, 1b),
le fluide de travail comprimé (13) est chauffé dans un composant pour acheminer la chaleur (2, 2a, 2b) par apport d'une quantité de chaleur,
le fluide de travail chauffé (15, 26) est guidé hors du composant pour acheminer la chaleur dans au moins une turbine (3, 3a, 3b) et y est détendu,
lors de la détente du fluide de travail une puissance d'arbre est produite dans la turbine,
au moins une première partie de la puissance d'arbre est utilisée pour l'entraînement du compresseur,
une partie de la puissance d'arbre dépassant la première partie est utilisée comme puissance utile (P_{act}) pour l'entraînement d'un consommateur de puissance (5), et
le fluide de travail est refroidi avec une puissance de refroidissement avant et/ou pendant la compression en vue de réguler un écart de régulation (Pₛₑₜ - P_{act}) de la puissance utile (P_{act}),
**caractérisé en ce que** parallèlement à un réglage de la puissance de refroidissement, la quantité de chaleur acheminée est ajustée de telle sorte qu'au moins une température à l'entrée de la turbine (T₁, T₃) du fluide de travail soit toujours maintenue substantiellement constante.

2. Procédé selon la revendication 1, **caractérisé en ce que** la position d'une rangée de préguidage (22) réglable est maintenue constante.

3. Procédé selon la revendication 2, **caractérisé en ce que** la rangée de préguidage est maintenue ouverte au maximum.

4. Procédé selon l'une quelconque des revendications précédentes, **caractérisé en ce que** de la chaleur supplémentaire est acheminé au moins une fois à un fluide de travail (25) partiellement détendu dans au moins une turbine (3a) entre deux turbines (3a, 3b) ou étages de turbine.

5. Procédé selon l'une quelconque des revendications précédentes, **caractérisé en ce que** la puissance utile du groupe à turbine à gaz est déterminée indirectement au moyen d'une valeur de traitement appropriée ou d'une combinaison de valeurs de traitement appropriées.

6. Procédé selon la revendication 5, **caractérisé en ce que** les valeurs de traitement sont la température des gaz d'échappement, la température du gaz chaud, les conditions ambiantes, la pression du compresseur, une pression intermédiaire du compresseur, l'ajustement de séries directrices variables du compresseur, ou une combinaison d'au moins deux des valeurs mentionnées ci-dessus.

7. Procédé selon l'une quelconque des revendications précédentes, dans lequel le fluide de travail non comprimé (11) ou le fluide de travail partiellement comprimé (12) est guidé à travers et/ou autour du côté primaire d'un échangeur de chaleur (4), dont le côté secondaire est sollicité par un réfrigérant, **caractérisé en ce que** la puissance de refroidissement est ajustée par l'ajustement de la température d'entrée et/ou du débit massique du réfrigérant.

8. Procédé selon l'une quelconque des revendications précédentes, dans lequel le fluide de travail non comprimé et/ou partiellement comprimé est guidé sur la surface mouillée d'un refroidisseur par évaporation, **caractérisé en ce que** la puissance de refroidissement est ajustée par l'ajustement de la quantité de liquide guidée sur la surface mouillée du refroidisseur.

9. Procédé selon l'une quelconque des revendications précédentes, **caractérisé en ce que** la puissance de refroidissement est ajustée par l'ajustement d'une quantité de liquide injectée dans le fluide de travail.

10. Procédé selon l'une quelconque des revendications précédentes, **caractérisé en ce que** l'on introduit en outre pour augmenter la puissance du groupe à turbine à gaz un fluide supplémentaire (24), notamment de la vapeur ou de l'eau, avant et/ou dans et/ou directement derrière le composant pour acheminer la chaleur (2, 2a, 2b) dans au moins une partie du fluide de travail comprimé.
